# EUROPÄISCHE PATENTSCHRIFT

(11) **EP 2 270 450 B1**
(45) Veröffentlichungstag und Bekanntmachung des Hinweises auf die Patenterteilung: **12.10.2011**
(21) Anmeldenummer: 09163639.9
(22) Anmeldetag: 24.06.2009
(51) Int. Cl.: G01J 3/46, G01N 21/25, G01N 21/27

(54) **Handlichtmessgerät**
Handheld light measuring device
Dispositif portable de mesure de lumière

(43) Veröffentlichungstag der Anmeldung: 05.01.2011
(73) Patentinhaber: X-Rite Europe GmbH, 8105 Regensdorf (CH)
(72) Erfinder: Frick, Beat, 8107 Buchs (CH); Feri, Lido, 5400 Baden (CH); Knechtle, Stefan, 8105 Regensdorf (CH)
(74) Vertreter: Schwabe - Sandmair - Marx

(56) Entgegenhaltungen:
- EP-A1- 0 878 704
- EP-A1- 1 507 134
- EP-A1- 1 760 453
- US-A- 3 935 436
- US-A- 4 455 090
- US-A- 5 963 333
- "Handheld Color - color-guide Family" BYK GARDNER, PRODUCT INFORMATION, 2005, [Online] 6. Oktober 2005 (2005-10-06), Seiten 51-58, XP007910642 Gefunden im Internet: URL:http://www.analis.be/files/VprodFiles/ 270/BYKHandColorguideFam.pdf> [gefunden am 2009-11-24]
- ZWINKELS J C: "Colour-measuring instruments and their calibration" DISPLAYS DEVICES, DEMPA PUBLICATIONS, TOKYO, JP, Bd. 16, Nr. 4, 1. Mai 1996 (1996-05-01), Seiten 163-171, XP004032518 ISSN: 0141-9382

## Beschreibung

Die Erfindung betrifft ein Handlichtmessgerät, insbesondere ein Handfarbmessgerät, gemäss dem Oberbegriff des unabhängigen Anspruchs.

Handlichtmessgeräte sind in zahlreichen Ausführungen bekannt. Meist sind sie als Densitometer oder Farbmessgeräte ausgebildet, wobei unterschiedliche Messtechnologien zum Einsatz kommen. Viele bekannte Handlichtmessgeräte sind als Spektralphotometer ausgelegt und so universell einsetzbar.

Die bekannten Lichtmessgeräte umfassen üblicherweise eine Beleuchtungsanordnung für das auszumessende Messobjekt, eine Aufpickanordnung zur Erfassung des vom Messobjekt zurückgestrahlten Messlichts, eine lichtelektrische Wandleranordnung zur Umwandlung des erfassten Messlichts in entsprechende elektrische Signale und eine Elektronik zur Auswertung der elektrischen Signale und zur Steuerung der Funktionsabläufe des Messgeräts. Die Beleuchtungsanordnung kann weisses Licht erzeugen oder für farbiges Licht ausgelegt sein. Die Wandleranordnung kann eine Anzahl von Farbfiltern oder dispersive Elemente, z.B. ein Beugungsgitter, zur Aufspaltung des Messlichts in verschiedene Wellenlängenbereiche umfassen. Für die eigentliche Wandlung in elektrische Signale können Photodioden oder CCD-Wandler-Anordnungen vorgesehen sein.

Für die Ausmessung eines Messobjekts wird das Handlichtmessgerät an der interessierenden Stelle (Messort) des Messobjekts aufgesetzt, wobei die Messung durch eine in der Unterseite des Gerätegehäuses vorgesehene Messöffnung hindurch erfolgt.

Allen bekannten Lichtmessgeräten ist gemeinsam, dass sie von Zeit zu Zeit kalibriert werden müssen. Zu diesem Zweck sind sie oft mit einer integrierten Weissreferenzkachel ausgestattet, die für die Kalibrierung in den Messstrahlengang eingebracht werden kann. Im normalen Messeinsatz des Geräts befindet sich die Weissreferenzkachel ausserhalb des Messstrahlengangs in einer Parkstellung. Die Weissreferenzkachel kann z.B. auf einem im Gerätegehäuse verschiebbaren oder verschwenkbaren Tragorgan angeordnet sein. Es sind auch schon Lichtmessgeräte bekannt, bei denen der Messstrahlengang mittels in diesen einbringbaren und wieder aus diesem entfernbaren Spiegelelementen auf eine ortsfest angebrachte Weissreferenzkachel umgelenkt wird. Alternativ kann die Weissreferenzkachel als separates Bauteil implementiert sein, welches für die Kalibrierung an die Stelle eines Messobjekts tritt bekannte lichtmessgeräte sind beispielsweise in EP-0878204-A1, EP-1507 134-A1 und EP-1760453-A1 oftenbart

Ausgehend von diesem Stand der Technik soll durch die vorliegende Erfindung ein Handlichtmessgerät der gattungsgemässen Art hinsichtlich Konstruktion und Kinematik seiner integrierten Weissreferenzkachel verbessert werden. Insbesondere sollen für die Ausmessung der Weissreferenzkachel keine zusätzlichen optischen Komponenten erforderlich sein und soll die Weissreferenzkachel mit möglichst kleinem Konstruktionsaufwand präzise in der Messebene des Messstrahlengangs positionierbar sein. In der aus dem Messstrahlengang entfernten Parkstellung der Weissreferenzkachel darf diese den normalen Messbetrieb des Geräts nicht stören. Ferner soll die Weissreferenzkachel vor Verschmutzung geschützt sein und schliesslich soll die Positionierung der Weissreferenzkachel im Messstrahlengang bzw. in Parkstellung ausserhalb des Messstrahlengangs auf einfache und möglichst ergonomische Weise möglich sein.

Diese der Erfindung zugrundeliegende Aufgabe wird durch die im kennzeichnenden Teil des unabhängigen Anspruchs angeführten konstruktiven Massnahmen gelöst. Weiterbildungen und besonders vorteilhafte Ausgestaltungen der Erfindung sind Gegenstand der abhängigen Ansprüche.

Gemäss einem grundlegenden Gedanken der Erfindung ist die Weissreferenzkachel in einem Endbereich einer länglichen Trägerplatte auf deren dem Gehäuseinneren zugewandten Seite angeordnet. Die Trägerplatte ist zwischen einer Parkposition und einer Arbeitsposition hin und her beweglich gelagert, wobei sie in der Parkposition das Gerätegehäuse an seiner Unterseite abschliesst und in das Gerätegehäuse versenkt ist. In der Arbeitsposition ist die Trägerplatte aus der Unterseite des Gerätegehäuses herausgehoben und in Längsrichtung versetzt und deckt mit dem mit der Weissreferenzkachel versehenen Endbereich das Messfenster ab. Durch diese Massnahmen wird die Weissreferenzkachel vor Verschmutzung geschützt und kann in Arbeitsposition auf einfache Weise ein Verschmutzungsschutz der hinter dem Messfenster befindlichen Komponenten des Messgeräts erreicht werden.

Die Bewegung (Kinematik) der Träger-platte bzw. der auf ihr befindlichen Weissreferenzkachel ist durch eine Kombination von Kulissenführung und Schwenkanlenkung realisiert. Die Trägerplatte ist dabei einerseits mit einem der Weissreferenzkachel abgewandten Endbereich in im Gerätegehäuse vorgesehenen Führungskulissen verschiebbar gelagert. Anderseits ist die Trägerplatte an mindestens einem Schwenkhebel angelenkt, welcher seinerseits schwenkbar im Gerätegehäuse gelagert ist. Diese Kombination ist konstruktiv besonders zweckmässig und einfach. Vorteilhafterweise ist die Trägerplatte an einer im Gerätegehäuse verankerten Feder aufgehängt, welche die Trägerplatte sowohl in deren Parkposition als auch in deren Arbeitsposition federnd festhält.

Ganz besonders vorteilhaft ist es gemäss einem weiteren wichtigen Aspekt der Erfindung, wenn der Schwenkhebel und die Feder so angeordnet und ihre Angriffspunkte an der Trägerplatte so gewählt sind, dass die Feder während der Bewegung der Trägerplatte zwischen der Parkposition und der Arbeitsposition und umgekehrt stärker gespannt ist als in der Parkposition und der Arbeitsposition und dass die Feder die Trägerplatte nach Überschreiten des Zustands stärkster Spannung selbsttätig in die Parkposition bzw. Arbeitsposition zieht und dort federnd festhält.

Gemäss einer besonders vorteilhaften Weiterbildung der Erfindung ist die Weissreferenzkachel an der Trägerplatte nach allen Seiten gleitend kippbar gelagert. Dadurch kann auf einfache Weise eine Kompensation von Parallelitätsfehlern bei der Positionierung der Weissreferenzkachel in der Arbeitsstellung erreicht werden.

Besonders zweckmässig ist es dabei, wenn die Weissreferenzkachel einen an der Trägerplatte montierten Kachelbasisteil und einen Kachelträgerteil aufweist, welcher eine Kachelfolie trägt und vorzugsweise über gegengleiche Kugelkalottenflächen gleitend kippbar im Kachelbasisteil angeordnet ist. Dies erlaubt eine konstruktiv besonders einfache Realisierung der Verkippbarkeit der Weissreferenzkachel.

Im Folgenden wird ein Ausführungsbeispiel des erfindungsgemässen Handlichtmessgeräts anhand der Zeichnung näher erläutert. In der Zeichnung zeigen:
- Fig. 1-3: je eine Schrägansicht des Handlichtmessgeräts in drei verschiedenen Stel- lungen seiner Weissreferenzkachel,
- Fig. 4-6: je einen schematisierten Längsschnitt durch das Handlichtmessgerät mit Stellungen der Weissreferenzkachel entsprechend den Figuren 1-3,
- Fig. 7: eine Ansicht einer die Weissreferenzkachel tragendenden Trägerplatte von innen bzw. oben,
- Fig. 8: einen Schnitt durch die Trägerplatte nach der Linie VIII-VIII der Fig. 7,
- Fig. 9: eine explodierte Ansicht der Trägerplatte und der Weissreferenzkachel, und
- Fig. 10a-c: je eine Skizze zur Erläuterung der Funktionsweise einer gleitenden Befes- tigung der Weissreferenzkachel auf bzw. an der Trägerplatte.

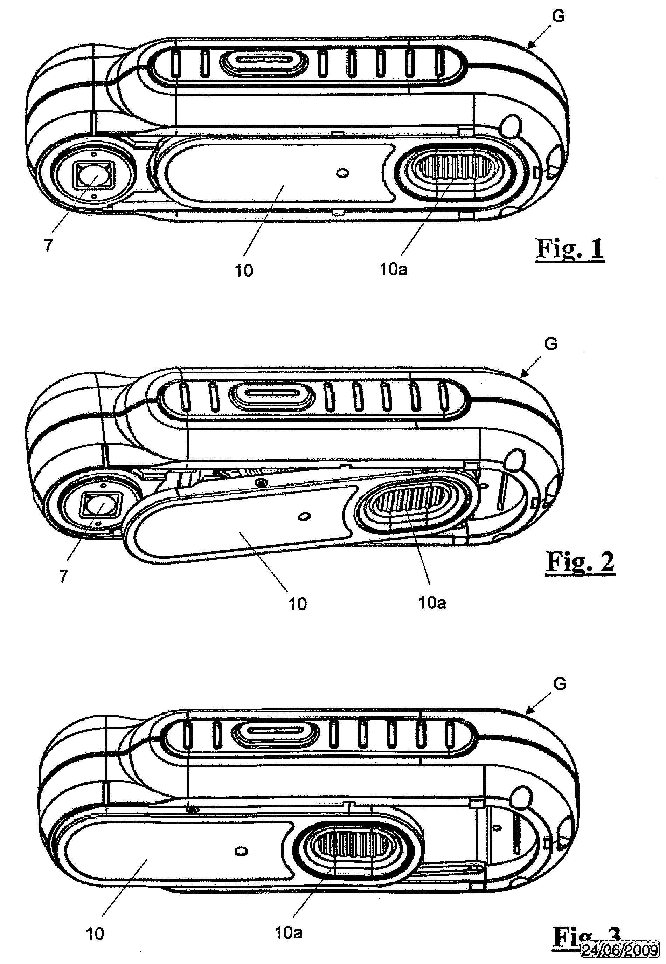

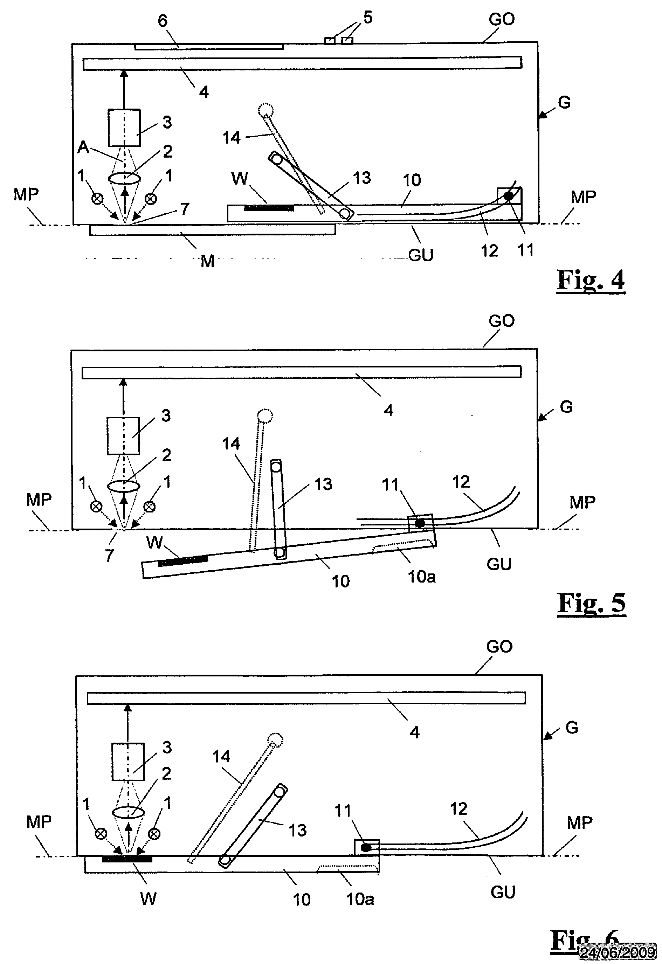

Das dargestellte erfindungsgemässe Handlichtmessgerät umfasst ein im Wesentlichen quadrisches Gehäuse G mit gerundeten Kanten, in bzw. an dem alle Funktionskomponenten angeordnet sind. Wie insbesondere aus den Figuren 4-6 ersichtlich ist, sind dies eine Beleuchtungsanordnung 1, eine Messlichtaufpickanordnung 2, eine lichtelektrische Wandleranordnung 3 und eine Auswerte- und Steuerelektronik 4. An der Oberseite GO des Gehäuses G (Fig. 1) sind Bedienungstasten 5 und eine Anzeigevorrichtung 6 angeordnet (Fig. 4). An der Unterseite GU des Gehäuses G befindet sich ein Messfenster 7.

Die Beleuchtungsanordnung 1 umfasst eine oder mehrere Lichtquellen, welche das Messobjekt M in der Regel unter einem normierten Einfallswinkel von z.B. 45°+-5° durch das Messfenster 7 hindurch mit weissem oder farbigem Licht beaufschlagen. Die Messlichtaufpickanordnung 2 erfasst ebenfalls durch das Messfenster 7 hindurch das vom Messobjekt zurückgestrahlte Messlicht unter einem normierten Messwinkelbereich von z.B. 0°+-5° und führt es der Wandleranordnung 3 zu. Je nach Auslegung des Messgeräts zerlegt die Wandleranordnung das ihr zugeführte Messlicht in eine mehr oder weniger grosse Anzahl von Wellenlängenbereichen und wandelt entweder das gesamte, unzerlegte Messlicht oder die einzelnen Lichtanteile in entsprechende elektrische, üblicherweise digitale Signale um. Letztere werden dann von der Auswerte- und Steuerelektronik 4 ausgewertet und dabei zu den interessierenden Messwerten aufbereitet. Die optische Achse der Messlichtaufpickanordnung 2 ist mit A bezeichnet (Fig. 4).

In einem bevorzugten Ausführungsbeispiel kann die Beleuchtung des Messobjekts mit mehreren Lichtquellen, insbesondere Leuchtdioden, unterschiedlicher Farben erfolgen und als Wandleranordnung ein bildgebender Sensor eingesetzt sein. Bei einem mit einem solchen bildgebenden Sensor ausgestatteten Lichtmessgerät dient die Weissreferenzkachel insbesondere auch zum Weissabgleich aller Bildpunkte, d.h. dem Ausgleich von Inhomogenitäten der Beleuchtung, der Optik und des Sensors.

Für die Ausmessung eines Messobjekts M wird das Lichtmessgerät mit seiner Unterseite auf dieses so aufgesetzt, dass sich das Messfenster 7 möglichst mittig, d.h. mit der opischen Achse des Messstrahlengangs in der Mitte der interessierenden Messstelle des Messobjekts befindet. Die Oberfläche des Messobjekts M befindet sich dabei in der durch die Unterseite GU des Gehäuses G definierten, in den Figuren 4-6 mit MP bezeichneten Messebene. Dann wird z.B. mittels einer der Bedienungstasten 5 ein Messvorgang ausgelöst.

So weit entspricht das vorstehend beschriebene Lichtmessgerät in Aufbau und Funktion voll und ganz den bekannten Geräten dieser Art, so dass der Fachmann keiner näheren Erläuterung bedarf.

Der wesentlichste Unterschied des erfindungsgemässen Lichtmessgeräts gegenüber den bekannten Geräten der gattungsgemässen Art besteht in der Ausbildung und Anordnung der für die Kalibrierung des Geräts eingesetzten integrierten Weissreferenzkachel, die in den Figuren 4-6 mit W bezeichnet ist. Unter Weissreferenzkachel im Sinne der vorliegenden Erfindung wird nicht nur eine Kachel im engeren Sinn verstanden, sondern unabhängig von der körperlichen Ausbildung grundsätzlich jede Art von körperlicher Farbreferenz, wobei diese je nach Messgerät auch nicht weiss im engeren Sinn zu sein braucht, sondern einfach nur eine geeignete definierte Farbe mit einer ausreichenden Langzeitstabilität aufweisen muss.

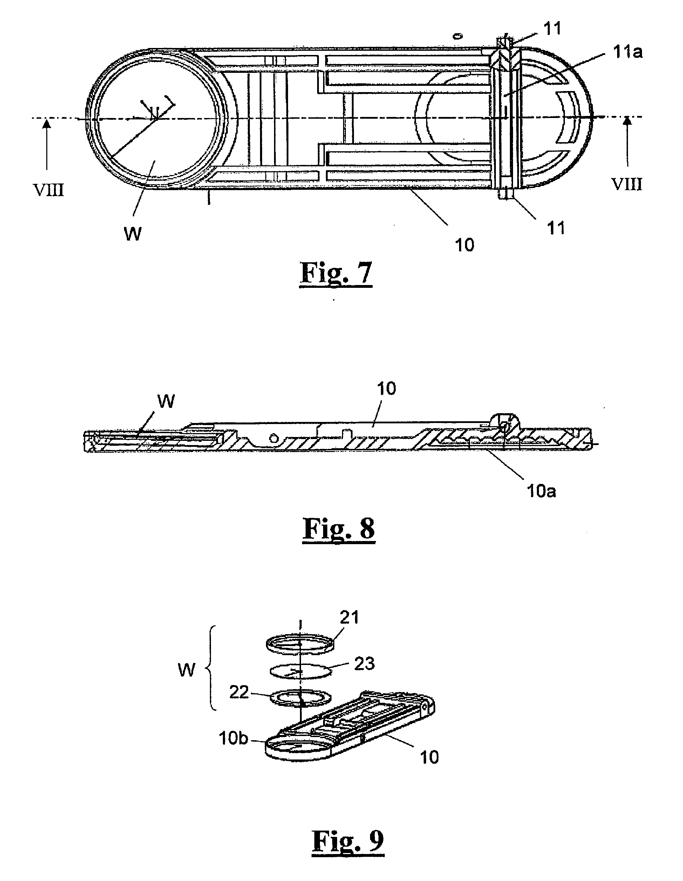

Die Weissreferenzkachel W ist erfindungsgemäss in der Nähe des einen Endes einer länglichen Trägerplatte 10 an deren Innenseite angeordnet. Die Trägerplatte 10 schliesst das Gerätegehäuse G an seiner Unterseite GU ab. Mittels am anderen Ende der Trägerplatte 10 seitlich vorgesehenen Kulissengleitern 11, die durch die Enden eines Rundstabs 11 a gebildet sind (Fig. 7), ist die Trägerplatte 10 in zwei im Gerätegehäuse G seitlich gegenüberliegend angeordneten Führungskulissen 12 verschiebbar geführt. Ferner ist die Trägerplatte 10 ungefähr mittig an zwei gegenüberliegenden, im Gerätegehäuse G angelenkten Schwenkhebeln 13 schwenkbar gelagert. Eine Feder 14 ist mit ihrem einen Ende an der Trägerplatte 10 befestigt und mit ihrem anderen Ende im Gerätegehäuse verankert. Die Feder 14 ist vorzugsweise als Schenkelfeder ausgebildet, in der Zeichnung ist jedoch der Einfachheit halber eine Zugfeder dargestellt. In ihrem der Weissreferenzkachel W gegenüberliegenden Endabschnitt ist die Trägerplatte 10 an der Aussenseite mit einer Griffmulde 10a versehen.

Die Trägerplatte 10 und mit ihr die Weissreferenzkachel W ist zwischen einer Parkposition und einer Arbeitsposition beweglich verstellbar und wird in diesen beiden Positionen durch die Feder 14 ausreichend stabil festgehalten. Die Parkposition ist in Fig. 4, die Arbeitsposition in Fig. 6 dargestellt. Die Fig. 5 zeigt die Trägerplatte in einer Zwischenposition. Die Bewegungskinematik ist durch die Kombination von Kulissenführung und Schwenkanlenkung realisiert.

In der Parkposition gemäss den Figuren 1 und 4 ist die Trägerplatte 10 im Gerätegehäuse G versenkt und befindet sich oberhalb der Messebene MP. Die Weissreferenzkachel W befindet sich vollständig innerhalb des Gerätegehäuses und ist so vor Verschmutzung oder Zugriff durch den Gerätebenutzer geschützt. Das Messfenster 7 ist in der Parkposition der Trägerplatte offen.

Durch Bewegung der Trägerplatte 10 in Richtung auf das Messfenster wird die Trägerplatte zuerst mit ihrem vorderen, die Weissreferenzkachel tragenden Endabschnitt und dann auch als Ganzes entgegen der Kraft der Feder 14 aus der Unterseite GU des Gerätegehäuses G herausgehoben (Figuren 2 und 5). Schliesslich erreicht die Trägerplatte 10 ihre Arbeitsposition (Figuren 3 und 6), in welcher ihr vorderer Endabschnitt das Messfenster 7 verschliesst und die Weissreferenzkachel W im Messstrahlengang liegt. Die Trägerplatte 10 liegt jetzt parallel zur Geräteunterseite GU unterhalb der Messebene MP, die Oberfläche der Weissreferenzkachel W befindet sich exakt in der Messebene MP und kann jetzt für Kalibrierungszwecke ausgemessen werden. Durch Zurückschieben der Trägerplatte 10 in Richtung vom Messfenster 7 weg wird die Trägerplatte 10 und damit auch die Weissreferenzkachel W wieder in die Parkposition zurückbewegt.

Aufgrund der Anordnung der Schwenkhebel 13 und der Feder 14 und deren Angriffspunkte an der Trägerplatte wird die Feder 14 während der Bewegung der Trägerplatte 10 von der Parkposition in die Arbeitsposition zuerst gespannt und dann wieder etwas entlastet. Dasselbe geschieht bei der Zurückbewegung in die Parkposition. Dadurch ergibt sich eine Art Kniehebelwirkung, aufgrund welcher die Feder 14 die Trägerplatte 10 nach Überschreiten des Zustands stärkster Spannung (Totpunkt) in die eine bzw. andere der beiden Endpositionen zieht und dort festhält.

In der Arbeitsposition deckt die Trägerplatte 10 das Messfenster 7 und schützt so die dahinterliegenden Komponenten vor Verschmutzung. Dies ist z.B. für die Lagerung des Geräts von Vorteil.

Für die Kinematik der Trägerplatte 10 bzw. der Weissreferenzkachel W ist nur ein geringer konstruktiver Aufwand erforderlich und die Verstellung der Trägerplatte 10 bzw. der Weissreferenzkachel W ist einfach und bequem durchführbar.

In den Figuren 7-9 ist eine besonders vorteilhafte Ausbildung der Trägerplatte 10 und speziell der Weissreferenzkachel W dargestellt. Wie man insbesondere aus Fig. 9 erkennt, ist die Trägerplatte 10 an ihrem der Griffmulde 10a gegenüberliegenden Ende an der Innenseite mit einer Aufnahmemulde 10b versehen, in welcher die Weissreferenzkachel W fest montiert ist. Die Weissreferenzkachel W besteht körperlich aus drei Teilen, und zwar einem Kachelbasisteil 21, einem Kachelträgerteil 22 und einer Kachelfolie 23, welche die eigentliche Weissreferenz bildet. Der Kachelbasisteil 21 ist in der Aufnahmemulde 10b angeordnet und befestigt. Der Kachelträgerteil 22 ist nach allen Seiten beschränkt kippbar im Kachelbasisteil 21 gelagert und trägt an seiner Oberfläche die Kachelfolie 23. Die Kippbarkeit des Kachelträgerteils 22 im bzw. relativ zum Kachelbasisteil 21 ist dadurch realisiert, dass der Kachelbasisteil 21 und der Kachelträgerteil 22 mit gegengleichen Kugelkalottenflächen 21a und 22a ausgestattet sind und mit diesen Kugelkalottenflächen an einander gleitend anliegen.

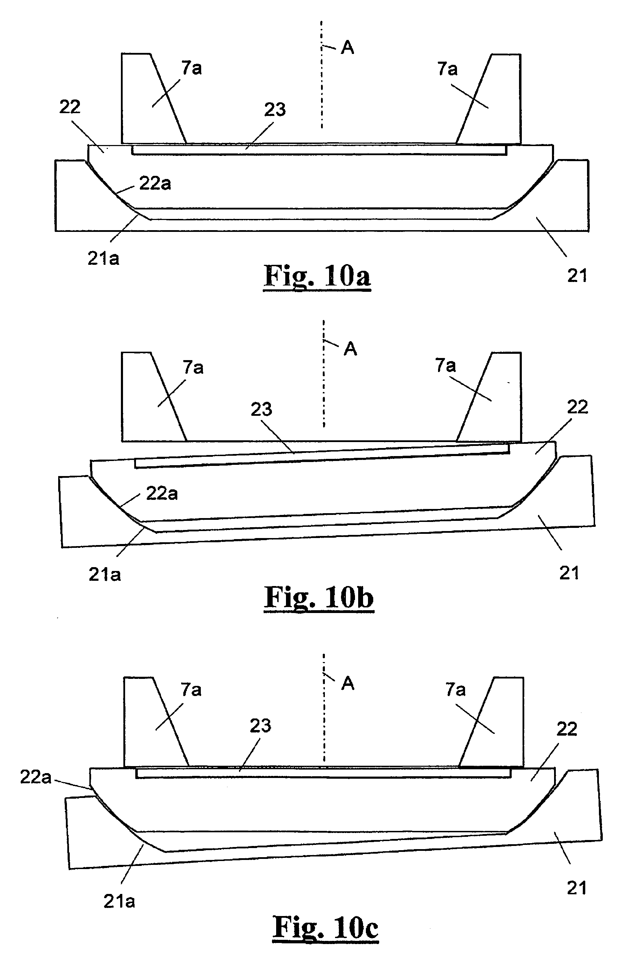

Für eine korrekte und präzise Ausmessung der Weissreferenzkachel W ist es erforderlich, dass diese während des Messvorgangs präzise in der Messebene des Messfensters 7 bzw. senkrecht zur optischen Achse A der Messlichtaufpickanordnung 2 ausgerichtet ist. Idealerweise nehmen dann die einzelnen Teile der Weissreferenzkachel W die in der Fig. 10a dargestellten Positionen ein. Die Messblende ist darin mit 7a bezeichnet.

Wenn die Trägerplatte 10 aus irgendeinem Grund nicht genau parallel zur Gehäuseunterseite bzw. Messebene positioniert ist, dann würde die Weissreferenzkachel W normalerweise zur Messebene geneigt vor der Messblende 7a stehen, so wie dies in Fig. 10b beispielsweise dargestellt ist. Aufgrund der erfindungsgemässen nach allen Seiten frei kippbaren Lagerung des Kachelträgerteils 22 im Kachelbasisteil 21 wird jedoch eine automatische Ausrichtung der Oberfläche der Weissreferenzkachel W erreicht und der Parallelitätsfehler ausgeglichen. Die Trägerplatte 10 bzw. die auf ihr montierte Weissreferenzkachel W braucht dazu lediglich leicht gegen die Messblende 7a gedrückt zu werden. Die Fig. 10c verdeutlicht dies.

Die erfindungsgemässe Realisierung der Weissreferenzkachel W bzw. deren Kinematik ist für jede Art von Handlichtmessgerät geeignet. Dementsprechend ist die Erfindung nicht auf Lichtmessgeräte im engeren Sinn beschränkt, sondern umfasst insbesondere jede Art von Farbmessgerät oder Densitometer oder dergleichen.

## Patentansprüche

1. Handlichtmessgerät mit einem Gerätegehäuse (G), welches eine Unterseite (GU) aufweist, in der ein Messfenster (7) vorgesehen ist, durch welches ein Messstrahlengang hindurchgreift, so dass ein Messobjekt (M) ausmessbar ist, wenn das Gerätegehäuse (G) mit seiner Unterseite (GU) auf dem Messobjekt (M) positioniert ist;
**dadurch gekennzeichnet, dass**:
das Handlichtmessgerät eine integrierte, beweglich gelagerte Weissreferenzkachel (W) aufweist, welche in den Messstrahlengang einführbar und wieder aus diesem entfernbar ist;
die Weissreferenzkachel (W) in einem Endbereich einer länglichen Trägerplatte (10) auf deren dem Gehäuseinneren zugewandten Seite angeordnet ist, welche Trägerplatte (10) zwischen einer Parkposition und einer Arbeitsposition hin und her beweglich gelagert ist,
wobei die Trägerplatte (10) in der Parkposition das Gerätegehäuse (G) an seiner Unterseite (GU) abschließt und in das Gerätegehäuse (G) versenkt ist und wobei die Trägerplatte (10) in der Arbeitsposition aus der Unterseite (GU) des Gerätegehäuses (G) herausgehoben und in Längsrichtung versetzt ist und mit dem mit der Weissreferenzkachel (W) versehenen Endbereich das Messfenster (7) abdeckt;
die Trägerplatte (10) mit einem der Weissreferenzkachel (W) abgewandten Endbereich in im Gerätegehäuse (G) vorgesehenen Führungskulissen (12) verschiebbar gelagert ist;
die Trägerplatte (10) am abgewandten Endbereich seitlich angebrachte Kulissengleiter (11) aufweist, so dass die Trägerplatte (10) in den Führungskulissen (12) verschiebbar geführt werden kann;
wobei die Führungskulissen (12) in Richtung zum Messfenster (7) verlaufen und an der Messfenster abgewandten Seite einen gekrümmten Abschnitt aufweisen, so dass durch Bewegung der Trägerplatte (10) in Richtung auf das Messfenster (7) die Trägerplatte (10) aus der Unterseite (GU) des Gerätegehäuses (6) herausgehoben wird; und
die Trägerplatte (10) an mindestens einem Schwenkhebel (13) mittig angelenkt ist, welcher seinerseits schwenkbar im Gerätegehäuse (G) gelagert ist.

2. Handlichtmessgerät nach Anspruch 1, **dadurch gekennzeichnet, dass** die Trägerplatte (10) an einer im Gerätegehäuse (G) verankerten Feder (14) aufgehängt ist.

3. Handlichtmessgerät nach Anspruch 2, **dadurch gekennzeichnet, dass** die Feder (14) die Trägerplatte (10) sowohl in deren Parkposition als auch in deren Arbeitsposition federnd festhält.

4. Handlichtmessgerät nach Anspruch 3, **dadurch gekennzeichnet, dass** der Schwenkhebel (13) und die Feder (14) so angeordnet und ihre Angriffspunkte an der Trägerplatte (10) so gewählt sind, dass die Feder (14) während der Bewegung der Trägerplatte (10) zwischen der Parkpositon und der Arbeitsposition und umgekehrt stärker gespannt ist als in der Parkposition und der Arbeitsposition und dass die Feder (14) die Trägerplatte (10) nach Überschreiten des Zustands stärkster Spannung selbsttätig in die Parkposition bzw. Arbeitsposition zieht und dort federnd festhält.

5. Handlichtmessgerät nach einem der vorangehenden Ansprüche, **dadurch gekennzeichnet, dass** die Weissreferenzkachel (W) an der Trägerplatte (10) nach allen Seiten gleitend kippbar gelagert ist.

6. Handlichtmessgerät nach Anspruch 5, **dadurch gekennzeichnet, dass** die Weissreferenzkachel (W) einen an der Trägerplatte (10) montierten Kachelbasisteil (21) und einen Kachelträgerteil (22) aufweist, welcher eine Kachelfolie (23) trägt und vorzugsweise über gegengleiche Kugelkalottenflächen (21a, 22a) gleitend kippbar im Kachelbasisteil (21) angeordnet ist

7. Handlichtmessgerät nach einem der vorangehenden Ansprüche, **dadurch gekennzeichnet, dass** die Trägerplatte (10) mit einer Griffmulde (10a) versehen ist.

8. Handlichtmessgerät nach einem der vorangehenden Ansprüche, **dadurch gekennzeichnet, dass** es eine Beleuchtungsanordnung (1) zur Beleuchtung eines Messorts auf dem Messobjekt (M), eine Aufpickanordnung (2) zur Erfassung des vom Messobjekt zurückgestrahlten Messlichts, eine Wandleranordnung (3) zur Umwandlung des Messlichts in entsprechende elektrische Signale und eine Auswerte- und Steuerelektronik (4) zur Auswertung der elektrischen Signale und zur Steuerung der Funktionsabläufe des Messgeräts umfasst.

## Claims

1. A hand-held light-measuring instrument with an instrument housing (G) which has an underside (GU) in which a measurement window (7) is provided through which a measurement beam path engages so that a measurement object (M) is capable of being measured when the instrument housing (G) is positioned with its underside (GU) on the measurement object (M), **characterized in that** the hand-held light-measuring instrument has an integrated white reference tile (W) which is mounted in a movable manner and which is capable of being inserted into the measurement beam path and is capable of being removed from it again; the white reference tile (W) is arranged in an end region of an elongate support plate (10) on the side thereof facing the interior of the housing, the support plate (10) being mounted in a movable manner so as to reciprocate between a parking position and an operative position, wherein the support plate (10) in the parking position closes off the instrument housing (G) on its underside (GU) and is lowered into the instrument housing (G), and wherein the support plate (10) in the operative position is lifted out of the underside (GU) of the instrument housing (G) and is displaced in the longitudinal direction and covers the measurement window (7) with the end region provided with the white reference tile (W) ;
the support plate (10) is mounted so as to be displaceable with an end region facing away from the white reference tile (W) in guide slots (12) provided in the instrument housing (G);
the support plate (10) has slot slides (11) attached laterally on the end region facing away, so that the support plate (10) can be guided in a displaceable manner in the guide slots (12);
wherein the guide slots (12) extend in the direction towards the measurement window (7) and have a curved portion on the side facing away from the measurement window, so that as a result of the movement of the support plate (10) in the direction towards the measurement window (7) the support plate (10) is lifted out of the underside (GU) of the instrument housing (G); and the support plate (10) is articulated centrally to at least one swivel lever (13) which in turn is mounted in a pivotable manner in the instrument housing (G).

2. A hand-held light-measuring instrument according to claim 1, **characterized in that** the support plate (10) is suspended on a spring (14) anchored in the instrument housing (G).

3. A hand-held light-measuring instrument according to claim 2, **characterized in that** the spring (14) holds the support plate (10) in a springing manner both in its parking position and in its operative position.

4. A hand-held light-measuring instrument according to claim 3, **characterized in that** the swivel lever (13) and the spring (14) are arranged in such a way and the points of engagement thereof on the support plate (10) are selected in such a way that during the movement of the support plate (10) between the parking position and the operative position and vice versa the spring (14) is stressed to a greater degree than in the parking position and the operative position, and after exceeding the state of greatest stressing the spring (14) automatically draws the support plate (10) into the parking position or the operative position respectively and holds it there in a resilient manner.

5. A hand-held light-measuring instrument according to any one of the preceding claims, **characterized in that** the white reference tile (W) is mounted on the support plate (10) so as to be capable of being tilted in a sliding manner on all sides.

6. A hand-held light-measuring instrument according to claim 5, **characterized in that** the white reference tile (W) has a tile base part (21) mounted on the support plate (10) and a tile carrier part (22) which carries a tile foil (23) and is preferably arranged in the tile base part (21) in a manner capable of being tilted so as to slide over diametrically opposed spherical cup faces (21a, 22a).

7. A hand-held light-measuring instrument according to any one of the preceding claims, **characterized in that** the support plate (10) is provided with a recessed grip (10a) .

8. A hand-held light-measuring instrument according to any one of the preceding claims, **characterized in that** it comprises an illumination device (1) for illuminating a measurement location on the measurement object (M), a pick-up device (2) for detecting the measurement light reflected from the measurement object, a converter device (3) for converting the measurement light into corresponding electrical signals and an evaluation and control electronic device (4) for evaluating the electrical signals and for controlling the functional sequences of the measuring instrument.

## Revendications

1. Appareil de mesure de lumière portatif comportant un boîtier d'appareil (G) incluant une face inférieure (GU) dans laquelle est prévue une fenêtre de mesure (7) à travers laquelle s'étend un trajet optique de mesure de telle sorte qu'un objet de mesure (M) peut être mesuré lorsque le boîtier d'appareil (G) est positionné avec sa face inférieure (GU) sur l'objet de mesure (M),
**caractérisé ce que** :
l'appareil de mesure de lumière portatif comporte un carreau de référence blanc (W) monté de manière mobile, intégré, qui peut être introduit dans le trajet optique de mesure et en être de nouveau retiré,
le carreau de référence blanc (W) est disposé dans une zone d'extrémité d'une plaque de support oblongue (10) sur son côté dirigé vers l'intérieur du boîtier, laquelle plaque de support (10) est montée de manière mobile en va-et-vient entre une position rangée et une position de travail, dans lequel, dans la position rangée, la plaque de support (10) obture le boîtier d'appareil (G) au niveau de sa face inférieure (GU) et affleure le boîtier d'appareil (G), et dans lequel, dans la position de travail, la plaque de support (10) est soulevée pour sortir de la face inférieure (GU) du boîtier d'appareil (G) et est déplacée dans la direction longitudinale de manière à recouvrir la fenêtre de mesure (7) avec la zone d'extrémité munie du carreau de référence blanc (W),
la plaque de support (10) est montée de manière mobile avec une zone d'extrémité opposée au carreau de référence blanc (W) dans des coulisses de guidage (12) prévues dans le boîtier d'appareil (G),
la plaque de support (10) comporte des glissières à coulisse (11) agencées latéralement sur la zone d'extrémité opposée de telle sorte que la plaque de support (10) peut être guidée de manière mobile dans les coulisses de guidage (12),
dans lequel les coulisses de guidage (12) s'étendent en direction de la fenêtre de mesure (7) et comportent une partie courbe sur le côté opposé à la fenêtre de mesure de telle sorte qu'un déplacement de la plaque de support (10) en direction de la fenêtre de mesure (7) permet de soulever la plaque de support (10) pour la sortir par la face inférieure (GU) de l'appareil de mesure (G), et
la plaque de support (10) est centralement reliée à au moins un levier de pivotement (13) qui est à son tour monté de manière pivotante dans le boîtier d'appareil (G).

2. Appareil de mesure de lumière portatif selon la revendication 1, **caractérisé en ce que** la plaque de support (10) est suspendue à un ressort (14) ancré dans le boîtier d'appareil (G).

3. Appareil de mesure de lumière portatif selon la revendication 2, **caractérisé en ce que** le ressort (14) maintient fermement la plaque de support (10) aussi bien dans la position rangée que dans la position de travail, par une action de rappel.

4. Appareil de mesure de lumière portatif selon la revendication 3, **caractérisé en ce que** le levier de pivotement (13) et le ressort (14) sont disposés et leurs points d'attaque sur la plaque de support (10) sont choisis de telle sorte que le ressort (14) est mis sous tension plus intensément pendant le mouvement de la plaque de support (10) entre la position rangée et la position de travail, et vice versa, qu'il ne l'est dans la position rangée et dans la position de travail, et **en ce que** le ressort (14) tire automatiquement la plaque de support (10) dans la position rangée ou la position de travail et l'y maintient par une action de rappel après avoir franchi l'état de tension le plus élevé.

5. Appareil de mesure de lumière portatif selon l'une quelconque des revendications précédentes, **caractérisé en ce que** le carreau de référence blanc (W) est monté sur la plaque de support (10) de manière à pouvoir basculer par glissement de tous les côtés.

6. Appareil de mesure de lumière portatif selon la revendication 5, **caractérisé en ce que** le carreau de référence blanc (W) inclut une partie de base de carreau (21) montée sur la plaque de support (10) et une partie de support de carreau (22) portant un film de carreau (23) et de préférence disposée dans la partie de base de carreau (21) de sorte qu'elle peut basculer par glissement par l'intermédiaire de surfaces sphériques complémentaires (21a, 22a).

7. Appareil de mesure de lumière portatif selon l'une quelconque des revendications précédentes, **caractérisé en ce que** la plaque de support (10) est munie d'une cavité de prise (10a).

8. Appareil de mesure de lumière portatif selon l'une quelconque des revendications précédentes, **caractérisé en ce qu'**il comporte un agencement d'éclairage (1) pour éclairer un point de mesure sur l'objet de mesure (M), un agencement de détection (2) pour détecter la lumière de mesure renvoyée par l'objet de mesure, un agencement de conversion (3) pour convertir la lumière de mesure en signaux électriques correspondant et un système électronique d'évaluation et de commande (4) pour évaluer les signaux électriques et commander les séquences fonctionnelles de l'appareil de mesure.
